Europäisches Patentamt

European Patent Office

Office européen des brevets

(19)

(11) Publication number: **0 043 835**
**B1**

(12) **EUROPEAN PATENT SPECIFICATION**

(45) Date of publication of patent specification: 09.04.86

(21) Application number: 81900395.5

(22) Date of filing: 02.01.81

(88) International application number:
PCT/US81/00032

(87) International publication number:
WO 81/01969 23.07.81 Gazette 81/17

(51) Int. Cl.⁴: **B 08 B 1/00**, B 08 B 3/08,
C 11 D 3/48, C 11 D 7/26,
C 11 D 7/50, A 61 K 7/24,
A 61 K 7/30

(54) **DENTURE CLEANING.**

(30) Priority: 14.01.80 US 111998

(43) Date of publication of application:
20.01.82 Bulletin 82/03

(45) Publication of the grant of the patent:
09.04.86 Bulletin 86/15

(84) Designated Contracting States:
AT CH DE FR GB LI LU NL SE

(56) References cited:
GB-A-1 261 316
GB-A-1 292 482
GB-A-1 374 105
US-A-1 516 206
US-A-2 201 098
US-A-3 785 986
US-A-3 822 212
US-A-3 839 213
US-A-3 957 967
US-A-3 992 519
US-A-3 997 459
US-A-4 162 172
US-A-4 181 621

The file contains technical information
submitted after the application was filed and
not included in this specification

(73) Proprietor: DEN-MAT, INC.
631 South College
Santa Maria California 93454 (US)

(72) Inventor: IBSEN, Robert L.
1571 E. Main Street
Santa Maria, CA 93454 (US)
Inventor: GLACE, William Richard
225 Soares
Orcutt, CA 93455 (US)
Inventor: REED, William Roy
503 East Cox Lane
Santa Maria, CA 93454 (US)

(74) Representative: Casalonga, Axel et al
BUREAU D.A. CASALONGA OFFICE JOSSE &
PETIT Baaderstrasse 12-14
D-8000 München 5 (DE)

(56) References cited:
Journal of Prosthetic Dentistry, Issued
December 1979, Jorgensen, "Materials and
Methods For Cleaning Dentures", PP. 619-623

Courier Press, Leamington Spa, England.

**Description**

This invention relates to a method and a composition for cleaning dentures.

Background of the invention

While microbial plaque on the tissue surface of dentures has the same basic structure as plaque on natural teeth, the dentures of some patients exhibit a significantly higher concentration of bacteria. Apparently, yeasts are involved and there may be other microorganisms. Hence, routine denture cleaning should be effective in removing and preventing reaccumulation of microbial plaque and also in removing mucin, food debris, calculus and exogenous discoloration.

Proper hygienic care of removable dentures is important for maintaining a healthy oral mucosa in denture wearers. Denture cleanliness is often poor, because of improper mechanical cleansing and because of the relative inefficiency of most commercial products for chemical cleansing of dentures.

Currently, the most common type of routine denture cleansing, brushing with tap water, using either soap or toothpaste, can be effective, when practiced meticulously, in improving denture cleanliness and maintaining a healthy mucosa beneath removable dentures. However, denture cleanliness is reported to be generally poor, and denture wearers seem to be able to adjust more easily to wearing unclean dentures than they are to brushing properly.

Wear on dentures increases with the increasing diameter of the bristles and decreases with increasing length of the bristles. All powders and pastes increase the amount of wear on dentures. Products containing insoluble calcium carbonate, for example, are highly abrasive. There does not seem to be a direct relationship between the cleansing and polishing potential and the abrasive effect of a toothpaste on acrylic resin dentures. For example, toothpastes containing chloroform have been shown to cause severe denture wear, due to some solubility of acrylic resin in chloroform.

It has been hoped that efficient chemical denture cleansers could become important alternatives to mechanical cleansing, especially among geriatric or handicapped denture wearers. Yet, although many trade products are available to the general public, their effectiveness has not been proved conclusively.

The immersion-type chemical denture cleansers heretofore in use include alkaline peroxides (percarbonate perborate), alkaline hypochlorites, certain dilute acids, disinfectants, and enzymes.

Alkaline peroxide cleansers are the most commonly used denture cleansers. They include powders or tablets which become alkaline solutions of hydrogen peroxide when dissolved in water. This type of cleanser usually combines alkaline detergents, to reduce surface tension, and agents such as sodium perborate or percarbonate which release oxygen from the solution. The oxygen bubbles are supposed to exert a mechanical cleansing effect. Clinical studies on the effectiveness of peroxide cleansers have given varied results. They seem to be most effective on new plaque and stains when the denture is soaked in the chemical solution for several hours or overnight. These products are not effective when a 15 to 30-minute soaking period is used, even though some manufacturers recommend this short period. Also, there is evidence that peroxide cleansers when used for routine denture cleansing may cause bleaching of acrylic resin. Soft or resilient denture liners are very susceptible to the harmful effects of peroxide cleansers.

Hypochlorite cleansers, though effective with overnight immersion, should be used only intermittently because of bleaching, e.g., once a week. Even then, hypochlorite may damage a cobalt-chromium or stainless steel base. Commercial cleansers based on hydrochloric acid are hazardous. Dilute acetic acid and similar acids may be used to dissolve calculus by overnight immersion, but should be used only at weekly or biweekly intervals because they are corrosive.

Cleansers capable of operating with only a 15-minute-or-less immersion period and light brushing and rinsing for daily maintenance, would be more readily accepted by patients than those requiring overnight immersion.

Thus, US—A—2,201,098 discloses denture cleaning compositions containing a large amount of isopropyl alcohol combined with a low amount of citric acid without any wetting agent which dissolve mucin plaque accumulations.

US—A—3,822,212 disclose denture cleaning solutions consisting essentially of phosphoric acid, xylene sodium sulfonate, butyl Cellosolve, a non-ionic surfactant and an emulsifier which clean calcium deposits and organic stains from the dentures. However, it is important that such a solution cleanser not only maintain plaque-free dentures with a daily soaking period of less than 30-minutes (the shorter the better), but also that it not affect the color and surface luster of the denture acrylic resin.

Summary of the invention

This invention provides a denture cleanser that is effective in maintaining plaque-free dentures, when used as a diluted soaking solution daily for periods of only about four to thirty minutes, followed by very light brushing off and rinsing. Even the toughest calcium deposits, plaque, tartar, and stains may be cleaned from dentures within about twenty minutes with rubbing with gauze containing undiluted cleanser. Four minutes suffices for normal cleaning maintenance.

This new cleanser basically relies on dilute citric acid. In addition, it employs a wetting agent and preferably a bacterial agent or bacteristat, preferably one which is also a mycostat or mycocide, such as methyl paraben and similar materials. To improve aqueous solubility of the citric acid isopropyl alcohol is

**0 043 835**

used. Isopropyl alcohol not only prevents precipitation of the citric acid during storage and at low temperatures, it also improves the cleaning action.

Detailed description of the invention

The invention is preferably prepared as a concentrate to be diluted upon use. The concentrate employs citric acid at about 30% in aqueous solution, with isopropyl alcohol to enhance the solubility. Dilution is normally at about 4 to 1, with water, and the soaking period need last only about four to thirty minutes, depending on how bad the stains are. When used daily at the beginning of use of a new denture, four to five minutes soaking in freshly diluted solution are adequate.

Typical ranges of the concentrate are as follows:

| | |
|---|---|
| Water | 40 to 70% |
| Citric Acid | 28 to 32% |
| Wetting Agent | 2.5 to 7.5% |
| Isopropyl Alcohol | 7 to 10% |
| Bactericide | Enough to be effective |
| Food Coloring | 0.04% |

The formulation is, in some instances, used full strength, and in other instances is diluted up to about a 4:1 dilution (four parts water to one of concentrate).

A preferred bactericide+mycocide is methyl paraben (p-hydroxybenzoic acid, methyl ester) which is preferably used at a concentration of about 0.20% in the above concentrate, yielding 0.05% in the diluted cleaner. It can be used in a range of 0.25% to 0.10% in the concentrate as shown below. Some typical bacterio-myco stats and cides and their concentrations are as follows, though others may be used:

| Material | Preferred concentration in concentrate | Range in concentrate |
|---|---|---|
| Methyl paraben | 0.20% | 0.10—0.25% |
| Rose bengal | 0.02% | 0.06—0.01% |
| Malachite green | 0.02% | 0.06—0.01% |
| Captan | 0.25% | 0.50—0.10% |

Preferred wetting agents are sodium lauryl sulfate, dioctyl sodium sulfosuccinate and alkyl phenoxy polyethoxy ethanol.

While some cleansers on the market have incorporated citric acid as a minor ingredient, apparently in order to react with sodium bicarbonate to produce effervescence, none has used citric acid in the concentrations used here. For example, when the present concentrate is diluted at 4 to 1, the pH is about 1.9, whereas a prior-art effervescing denture cleaner containing citric acid, when diluted as recommended by the manufacturer, produces, a pH of about 5.8.

The following examples have all been found operative:

Example 1

| Ingredient | Parts by weight |
|---|---|
| Water | 53.37 |
| Citric Acid | 31.70 |
| Sodium lauryl sulfate | 6.0 |
| Isopropyl alcohol | 8.69 |
| Methyl paraben | 0.20 |
| Food Coloring (e.g. Schilling) | 0.04 |

3

Example 2

| Ingredient | Parts by weight |
|---|---|
| Water | 54.91 |
| Citric Acid | 31.80 |
| Dioctyl sodium sulfosuccinate | 4.56 |
| Isopropyl alcohol | 8.69 |
| Blue Food Coloring (e.g. Schilling) | 0.04 |

In all instances, these were diluted for use by water at four parts water to one of the concentrate. Each was found to be effective as stated above. The composition can be used full strength, or can be diluted with water from about 1 to 1 to about 4 parts of water to 1 part of the concentrate.

If prepared directly as a dilute solution according to the invention, the concentration of citric acid will be about 5.6% to about 6.4%. The concentration of the wetting agent may be about 0.5% to about 1.5% and that of the isopropyl alcohol about 1.4% to about 2%.

Normal maintenance requires only a daily soaking at the 1 to 4 dilution of the concentrate, preferably followed by light brushing and rinsing off in water, for badly stained dentures, they may be soaked in either the full-strength composition or in a 1:1 dilution thereof for six to eight hours a day for about a week, each time followed by scrubbing with gauze containing the undiluted composition, and then rinsing. Once the dentures have thereby been restored to normal conditions, the daily use of four minute soaking in the dilute 1:4 solution in water, followed by a light brushing off any residue, and rinsing, is sufficient for maintenance.

The invention also provides methods of cleaning dentures from plaque, tartar and other foreign materials without damaging the dentures comprising soaking them, preferably from 4 minutes to about 8 hours in a solution consisting essentially of water and, by weight, from about 5.6% to about 32% of citric acid, a wetting agent at about 0.5% to about 7.5% and isopropyl alcohol at about 1.4% to about 10%, brushing them off and rinsing them with water, or soaking them for about 6 to 8 hours in a solution consisting essentially of water and, by weight, about 14% to about 32% citric acid, a wetting agent at about 1% to about 7.5% and isopropyl alcohol at about 3% to about 10%.

In addition the invention provides a storable denture cleaning solution consisting essentially of water, citric acid at about 5.6 to about 32% by weight, wetting agent at about 0.5% to about 7.5% by weight and isopropyl alcohol at about 1.4% to about 10% by weight.

**Claims**

1. A method of cleansing dentures from plaque, tartar, and other foreign materials without damaging the dentures, comprising soaking them for from four minutes to about eight hours in a solution consisting essentially of water and, by weight, from about 5.6 to about thirty-two percent of citric acid, a wetting agent at about 0.5% to about 7.5%, and isopropyl alcohol at about 1.4 to about ten percent, brushing them off, and rinsing them with water.

2. The method of claim 1 wherein said solution contains a bactericide-mycocide at a small but an effective amount.

3. The method of claim 1 for daily maintenance without damage to the dentures, which comprises daily soaking them for from four to thirty minutes in a solution consisting essentially of water and, by weight, about 5.6 to about 6.4 percent of citric acid, a wetting agent at about 0.5% to about 1.5%, and isopropyl alcohol at about 1.4% to about 2%, lightly brushing off any residue, and rinsing them off with water.

4. The method of claim 3 wherein said solution contains a bactericide-mycocide at a small but an effective amount.

5. The method of claim 1, which comprises soaking the dentures for from about six to about eight hours in a solution consisting essentially of water and, by weight, about fourteen to about thirty-two percent of citric acid, a wetting agent at about 1% to about 7.5%, and isopropyl alcohol at about three to about ten percent.

6. The method of claim 5 wherein said solution contains a bactericide-mycocide at a small but effective amount.

7. A storable denture cleaning solution consisting essentially of water, citric acid at about 5.6 to about thirty-two percent by weight, wetting agent at about 0.5% to about 7.5% by weight, and isopropyl alcohol at about 1.4% to about ten percent by weight.

8. The solution of claim 7 including a small but effective amount of bactericide mycocide.

9. The denture cleaning solution of claim 7 consisting essentially of water, citric acid at about 5.6% to about 6.4% by weight, wetting agent at about 0.5 to about 1.5% by weight, and isopropyl alcohol from about 1.4% to about 2% by weight.

4

10. The solution of claim 9 including a small but effective amount of bactericide.

11. A storable liquid concentrate for use as a denture cleanser upon dilution by apparoximately four times its amount by weight of:

| | |
|---|---|
| citric acid | 28% to 32% |
| wetting agent | 2.5% to 7.5% |
| isopropyl alcohol | 7.0% to 10% |
| bactericide-mycocide | effective amount, near minimum |
| water | remainder |

12. The concentrate of claim 11 wherein said wetting agent is chosen from sodium lauryl sulfate, dioctyl sodium sulfosuccinate, and alkyl phenoxy polyethoxy ethanol.

13. The concentrate of claim 11 wherein said bactericide is chosen from:

| | Parts by weight |
|---|---|
| Methyl ester of p-hydroxybenzoic acid | 0.10% to 0.25% |
| Rose bengal | 0.01% to 0.06% |
| Malachite green | 0.01% to 0.06% |
| Captan | 0.10% to 0.50% |

14. A method of cleaning dentures wherein a denture is soaked in a cleansing solution, removed therefrom, scrubbed or brushed, and then rinsed, characterized in that the said cleansing solution consists essentially of water from about 5.6 to about 32 percent by weight citric acid, about 0.5% to about 7.5% by weight of a wetting agent, and from about 1.4% to about 10% by weight isopropyl alcohol.

**Patentansprüche**

1. Verfahren zur Reinigung von Zahnprothesen von Belägan, Weinstein und anderem Fremdmaterial ohne Beschädigung der Zahnprothesen, wobei diese während eines Zeitraums von 4 Minuten bis zu etwa 8 Stunden in eine Lösung eingelegt werden, die im wesentlichen aus Wasser und, bezogen auf Gewicht, etwa 5,6 bis etwa 32% Zitronensäure, einem Netzmittel in einer Menge von etwa 0,5 bis etwa 7,5% und Isopropylalkohol in einer Mengs von etwa 1,4 bis 10% besteht, worauf die Zahnprothesen abgebürstet und mit Wasser gespült werden.

2. Verfahren nach Anspruch 1, bei welchem diese Lösung ein Bakterizid—Mykozid in geringer, doch wirksamer Menge enthält.

3. Verfahren nach Anspruch 1 zur täglichen Pflege ohne Beschadigung der Zahnprothesen, bei welchem dieselben täglich 4 bis 30 Minuten lang in eine Lösung gelegt werden, die im wesentlichen aus Wasser und, bezogen auf Gewicht, etwa 5,6 bis etwa 6,4% Zitronensäure, einem Netzmittel in einer Menge von etwa 0,5 bis etwa 1,5% und Isopropylalkohol in einer Menge von etwa 1,4 bis etwa 2% besteht, worauf jeder Rückstand leicht abgebürstet und mit Wasser abgespült wird.

4. Verfahren nach Anspruch 3, bei welchem die Lösung ein Bakterizid -Mykozid in geringer, doch wirksamer Menge enthält.

5. Verfahren nach Anspruch 1, bei welchem die Zahnprothesen etwa 6 bis etwa 8 Stunden in eine Lösung gelegt werden, die im wesentlichen aus Wasser und, bezogen auf Gewicht, etwa 14 bis etwa 32% Zitronensäure, einem Netzmittel in einer Menge von etwa 1 bis etwa 7,5% und Isopropylalkohol in einer Menge von etwa 3 bis etwa 10% besteht.

6. Verfahren nach Anspruch 5, bei welchem diese Lösung ein Bakterizid-Mykozid in einer geringen, doch wirksamen Menge enthält.

7. Lagerfähige Zahnprothesen-Reinigungslösung, die im wesentlichen aus Wasser, Zitronensäure in einer Menge von etwa 5,6 bis etwa 32 Gew.-%, einem Netzmittel in einer Menge von etwa 0,5 bis etwa 7,5 Gew.-% und Isopropylalkohol in einer Menge von etwa 1,4 bis etwa 10 Gew.-% besteht.

8. Lösung nach Anspruch 7, die eine geringe, doch wirksame Menge eines Bakterizid-Mykozids enthält.

9. Zahnreinigungslösung nach Anspruch 7, die im wesentlichen aus Wasser, Zitronensäure in einer Menge von etwa 5,6 bis etwa 6,4 Gew.-%, einem Netzmittel in einer Menge von etwa 0,5 bis etwa 1,5 Gew.-% und Isopropylalkohol in einer Menge von etwa 1,4 bis etwa 2 Gew.-% besteht.

10. Lösung nach Anspruch 9, die eine geringe, aber wirksame Menge eines Bakterizids enthält.

11. Lagerfähiges flüssiges Konzentrat zur Verwendung als Zahnprothesen-Reinigungsmittel nach Verdünnung mit etwa der vierfachen Gewichtsmenge von:

| | |
|---|---|
| Zitronensäure | 28 bis 32% |
| Netzmittel | 2,5 bis 7,5% |
| Isopropylalkohol | 7,0 bis 10% |
| Bakterizid-Mykozid | wirksame Menge, nahe dem Minimum |
| Wasser | Rest |

12. Konzentrat nach Anspruch 11, in welchem das Netzmittel ausgewählt ist aus Natriumlaurylsulfat, Dioctyl-Natriumsulfonsuccinat, und Alkylphenoxypolyethoxyethanol.

13. Konzentrat nach Anspruch 11, in welchem das Bakterizid ausgewählt ist aus

| | Gew.-Teile |
|---|---|
| p-Hydroxybenzosäure-Methylester | 0,10 bis 0,25% |
| Rose bengal | 0,01 bis 0,06% |
| Malachitgrun | 0,01 bis 0,06% |
| Captan | 0,10 bis 0,50% |

14. Verfahren zur Reinigung von Zahnprothesen, bei welchem diese in eine Reinigungslösung eingelegt, aus dieser entnommen, abgerieben oder abgebürstet und dann gespült werden, dadurch gekennzeichnet, daß diese Reinigungslösung im wesentlichen aus Wasser, etwa 5,6 bis etwa 32 Gew.-% Zitronensäure, etwa 0,5 bis 7,5 Gew.-% eines Netzmittels etwa 1,4 bis etwa 10 Gew.-% Isopropylalkohol besteht.

**Revendications**

1. Procédé de nettoyage des dentiers pour enlever la plaque dentaire, le tartre, et d'autres matières parasites, sans endommager les dentiers, consistant à les tremper pendant de 4 minutes à environ 8 heures dans une solution constituée principalement d'eau et, en poids, d'environ 5,6 à environ 32% d'acide citrique, d'environ 0,5% à environ 7,5% d'un agent mouillant, et d'environ 1,4 à environ 10% d'alcool isopropylique, à les brosser, et à les rincer avec de l'eau.

2. Procédé selon la revendication 1, dans lequel ladite solution contient un bactéricide-mycocide en une quantité faible mais efficace.

3. Procédé selon la revendication 1, pour un entretien journalier sans dommage des dentiers, qui consiste à les tremper quotidiennement pendant de 4 à 30 minutes dans une solution constituée principalement d'eau et, en poids, d'environ 5,6 à environ 6,4% d'acide citrique, d'environ 0,5% à environ 1,5% d'un agent mouillant, et d'environ 1,4% à environ 2% d'alcool isopropylique, à enlever par brossage tout détritus, et à les rincer avec de l'eau.

4. Procédé selon la revendication 3, dans lequel ladite solution contient un bactéricide-mycocide en une quantité faible mais efficace.

5. Procédé selon la revendication 1, qui consiste à tremper les dentiers pendant d'environ 6 à environ 8 heures dans une solution constituée principalement d'eau et, en poids, d'environ 14 à environ 32% d'acide citrique, d'environ 1% à environ 7,5% d'un agent mouillant, et d'environ 3 à environ 10% d'alcool isopropylique.

6. Procédé selon la revendication 5, dans lequel ladite solution contient un bactéricide-mycocide en une quantité faible mais efficace.

7. Solution conservable pour le nettoyage de dentiers, constituée principalement d'eau, d'environ 5,6 à environ 32% en poids d'acide citrique, d'environ 0,5% à environ 7,5% en poids d'un agent mouillant, et d'environ 1,4% à environ 10% en poids d'alcool isopropylique.

8. Solution selon la revendication 7, comprenant une quantité faible mais efficace d'un bactéricide-mycocide.

9. Solution pour le nettoyage de dentiers selon la revendication 7, constituée principalement d'eau, d'environ 5,6 à environ 6,4% en poids d'acide citrique, d'environ 0,5 à environ 1,5% en poids d'un agent mouillant, et d'environ 1,4% à environ 2% en poids d'alcool isopropylique.

10. Solution selon la revendication 9, comprenant une quantité faible mais efficace d'un bactéricide.

**0 043 835**

11. Concentré liquide pouvant être conservé, à utiliser comme produit de nettoyage pour dentiers, après dilution par approximativement quatre fois sa quantité en poids, constitué de:

| | |
|---|---|
| acide citrique | 28% à 32% |
| agent mouillant | 2,5% à 7,5% |
| alcool isopropylique | 7,0% à 10% |
| bactéricide-mycocide | quantité efficace, proche du minimum |
| eau | complément |

12. Concentré selon la revendication 11, dans lequel ledit agent mouillant est choisi parmi le laurylsulfate de sodium, le dioctylsulfosuccinate de sodium, et un alkylphénoxypolyéthoxyéthanol.

13. Concentré selon la revendication 11, dans lequel ledit bactéricide est choisi parmi:

| | Parties en poids |
|---|---|
| Ester méthylique de l'acide p-hydroxybenzoïque | 0,10% à 0,25% |
| Rose bengale | 0,01% à 0,06% |
| Vert malachite | 0,01% à 0,06% |
| Captan | 0,10% à 0,50% |

14. Procédé de nettoyage de dentiers, dans lequel un dernier est trempé dans une solution de nettoyage, en est retiré, est récuré ou brossé, puis rincé, caractérisé en ce que ladite solution de nettoyage est constituée principalement d'eau, d'environ 5,6 à environ 32% en poids d'acide citrique, d'environ 0,5% à environ 7,5% en poids d'un agent mouillant, et d'environ 1,4% à environ 10% en poids d'alcool isopropylique.

7